# EUROPEAN PATENT SPECIFICATION

(11) **EP 4 635 720 B1**
(45) Date of publication and mention of the grant of the patent: **01.07.2026**
(21) Application number: 25171467.1
(22) Date of filing: 18.04.2025
(51) Int. Cl.: B29C 65/18, B29C 65/30, B29C 65/74, B29C 65/78, B29L 31/00

(54) **HEAT-SEALING APPARATUS FOR WRAPPING ARTICLES**
HEISSSIEGELVORRICHTUNG ZUM UMHÜLLEN VON GEGENSTÄNDEN
APPAREIL DE THERMOSCELLAGE POUR EMBALLER DES ARTICLES

(30) Priority: 19.04.2024 US 202463636572 P
(43) Date of publication of application: 22.10.2025
(73) Proprietor: Barry-Wehmiller, Inc., Duncan, South Carolina 29334 (US)
(72) Inventor: DAVIDSON, Mark, DUNCAN, SOUTH CAROLINA (US); RIDDLE, Joshua, DUNCAN, SOUTH CAROLINA (US); CLAESSENS, Adrianus, DUNCAN, SOUTH CAROLINA (US)
(74) Representative: Algemeen Octrooi- en Merkenbureau B.V.

(56) References cited:
- US-A- 4 305 240
- US-A1- 2024 025 130

## Description

### FIELD OF THE INVENTION

The present invention is directed toward a heat-sealing apparatus that can be used attendant to packaging and heat-sealing of a plurality of articles, and more particularly to a heat-sealing apparatus having a plurality of heat-sealing assemblies which are individually rotationally driven to permit efficient operation, and adjustment of the predetermined spacing of heat-seals formed between adjacent ones of the articles being packaged.

### BACKGROUND OF THE INVENTION

Many food items, such as stacks or bricks of cheese and the like, are typically packaged on an automatic, horizontal film wrapping machine, a so-called flow wrapper machine. This machine takes articles and wraps film around them, seals longitudinally, and then cross seals and cuts between each article. This type of apparatus includes an arrangement whereby the individual articles to be packaged are positioned in spaced relationship on a heat-sealable web, typically polymeric film. The web with the articles positioned thereon is advanced through the apparatus to form a longitudinal heat-seal along the length of the web, which heat-seal eventually forms a longitudinal heat-seal of each of the packages being formed.

Thereafter, the web and spaced-apart articles are advanced to a heat-sealing apparatus which forms transverse heat-seals at predetermined intervals, thereby forming upper and lower heat-seals for each of the articles being packaged. The machine typically has a multi-head variable pitch die cutting wheel. Its main advantage is an extended sealing time to ensure good seal quality. The cutting mechanism of the apparatus cuts the individual, sealed articles from the web for subsequent packaging, storage and shipment.

Current designs incorporate multiple heads that can be placed at variable intervals to match the pitch of the article. This is accomplished through an intermittent release mechanism. The heads grab the wheel of the machine with a sprag-type clutch device. Each head also incorporates a friction brake to keep the heads moving. The heat is controlled through wipers rubbing powered rings on the wheel. There is no independent temperature control. The opening and closing of the dies are controlled by a 3-dimensional cam path between forked rollers on a simple pivot. Jams can cause the machine to come to an abrupt stop. The machine speed is limited by seal time, head placement, and excessive vibration.

United States patent application US 2024/025130 A1 discloses a welding device for making and hermetically sealing a package containing a product. The welding device comprises first and second sealing and cutting equipment. Each sealing equipment is configured to receive a film forming a tubular envelope, to seal and cut it transversally for making at least one package. The welding device comprises a support body, bearing the first and the second sealing and cutting equipment, which is connectable to a packaging machine preferably a rotary drum of a packaging machine. Each sealing and cutting equipment comprises an arm operating as a sealing and cutting head and an abutment body. The arm is rotatably constrained to the support body and reversibly movable between an active position substantially abutting the abutment body, and an inactive position raised with respect to the abutment body. A locking device locks the arms in the active position in the welding step.

United States patent application US 4 305 240 A discloses a package forming and sealing machine receiving articles confined within a conveyed tubular wrapper of sheet material, a rotor having sealing and cutting heads radially adjustable for changing the span between adjacent heads on the periphery of the rotor, there being a swingable jaw and a stationary jaw on each of the heads, a locking linkage to operate the swingable jaw, a rotary shaft to operate the linkage, and substantially continuously driven from a sprocket through a disengageable clutch operated by a trip arm and stationary stop cams also radially adjustable with respect to the rotor axis, a chain loop embracing revolving sprockets on the rotor to produce operation of the swingable sealing jaws.

### SUMMARY OF THE INVENTION

The present invention is directed to a heat-sealing apparatus of a flow wrapper machine which facilitates efficient, reliable and versatile operation. Notably, the apparatus includes multiple ring gears driven by multiple servo motors in a desirably compact configuration, with the arrangement including quickly removable heat-sealing die heads for efficient operation and service.

An improved drive mechanism facilitates more accurate heat-sealing head placement, smoother operation, controlled stops, independent temperature control, and continuous running through die jams. Also included is a four-bar link on the heat-sealing head for opening and closing the heat-sealing dies.

The main drive consists of individual ring gear or gears connected to each heat-sealing head with a bolt or a quick release holding the die. Each of the ring gears is driven by a pinion gear attached to the pinion shaft connected to the drive motor. To support the ring gears, each ring gear rides on idler gears or wheels on the other pinion shafts. The rings gears are close together to support all the heat-sealing heads.

Cams on the machine open and close the heat-sealing dies. The heat-sealing heads are driven independently by each motor to make for a smooth motion that aligns the heads between each article. This continuous motion gives the machine the ability to run faster and more accurately. The four-bar link gives the ability to make the cam track flat and reproduce the same motion with each machine. It is also able to use a cam path diverter to open the dies if there is a jam in the die and for the machine to continue to run and divert the double pack later downstream.

In accordance with the illustrated embodiment, a heat-sealing apparatus for handling a plurality of articles carried on a heat-sealable web is disclosed. The apparatus includes a plurality of ring gear members arranged in parallel relationship with each other for rotation about a central axis.

The apparatus further includes a plurality of heat-sealing assemblies, each mounted on the periphery of a respective one of the ring gear members for rotation therewith. Each of the heat-sealing assemblies is movable between opened and closed positions for effecting heat-sealing of the web between adjacent ones of the articles carried by the heat-sealable web. A rotary electrical union provides power to each of the rotating heat-sealing assemblies, with the controls of the apparatus preferably configured to permit individual temperature control of the assemblies.

A plurality of drive spindles are positioned within the plurality of ring gear members for guiding rotational movement of the ring gear members. Notably, each of the drive spindles is operatively connected to a single, respective one of the ring gear members, so that together the drive spindles drive the ring gear members about the central axis.

Operation of the apparatus is provided by a plurality of servo drive motors respectively connected to the drive spindles. By this arrangement, operation of the drive motors drives the drive spindles and the ring gear members to advance the heat-sealing assemblies about the central axis of the apparatus, to thereby draw the heat-sealable web and the articles through the apparatus. As will be appreciated, selective operation of the drive motors positions the heat-sealing assemblies at predetermined intervals to heat-seal the web for heat-sealing the articles carried on the web. In the preferred form, each heat-sealing assembly is configured to cut the heat-sealed web at the predetermined intervals between the articles being wrapped, whereby the individual sealed articles are separated from the web for subsequent packaging, storage and shipment. Spacing between individual ones of the heat-sealing assemblies can be selectively varied during each cycle of the machine to achieve the desired formation of the transverse heat-seals while assuring smooth and reliable operation of the apparatus.

In the preferred embodiment, each of the heat-sealing assemblies comprises a four-bar linkage to permit movement of each heat-sealing assembly between opened and closed position by actuation from a two-dimensional cam. In the illustrated embodiment, the apparatus includes a diverter for engagement with at least one of the heat-sealing assemblies to move that one of the heat-sealing assemblies to the opened position to facilitate service of the apparatus. As noted, this diverter acts to open one or more of the heat-sealing assemblies if there is a jam or other malfunction, while permitting the apparatus to operate, and to divert any improperly packaged articles later downstream in the packaging process.

Service to the apparatus is facilitated by mounting each of the heat-sealing assemblies on the respective one of the ring gear members by a quick-release mechanism.

To ensure smooth and reliable operation, each of the drive spindles comprises a plurality of idler gears for non-driven engagement with the ring gear members to which that one of the drive spindles is not operatively connected.

Other features and advantages will be readily apparent from the following detailed description and accompanying drawings. For clarity, the drawings illustrate the invention without every component in every view, and include exploded and fragmentary views.

### BRIEF DESCRIPTION OF THE DRAWINGS

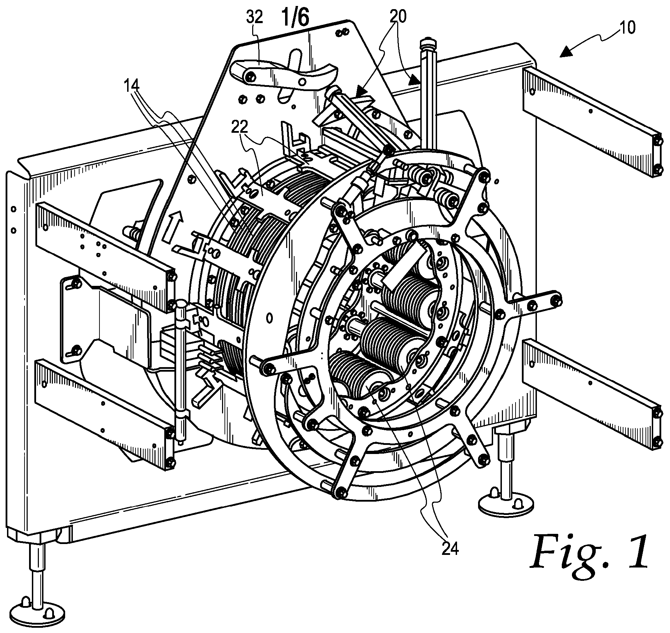

FIG. 1 is a diagrammatic perspective view, partially cutaway, showing a heat-sealing apparatus embodying the principles of the present invention;

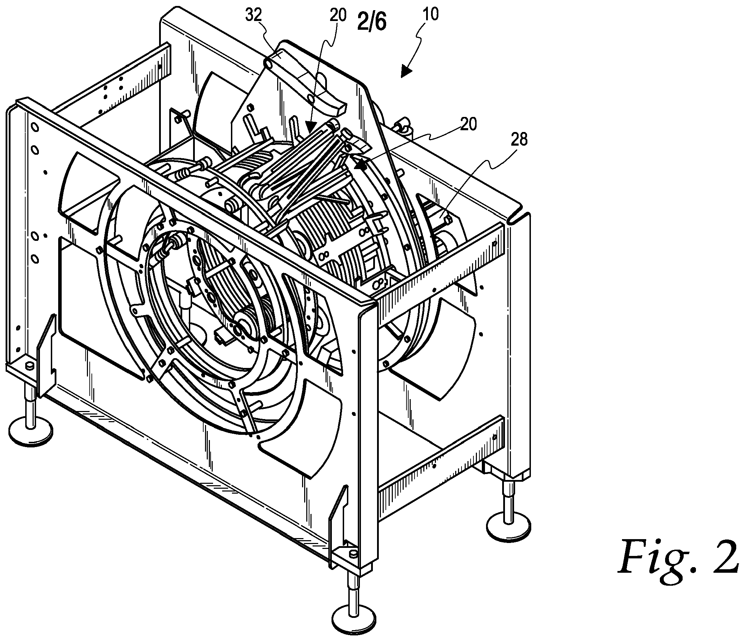

FIG. 2 is another diagrammatic perspective view of the heat-sealing apparatus shown in FIG.1;

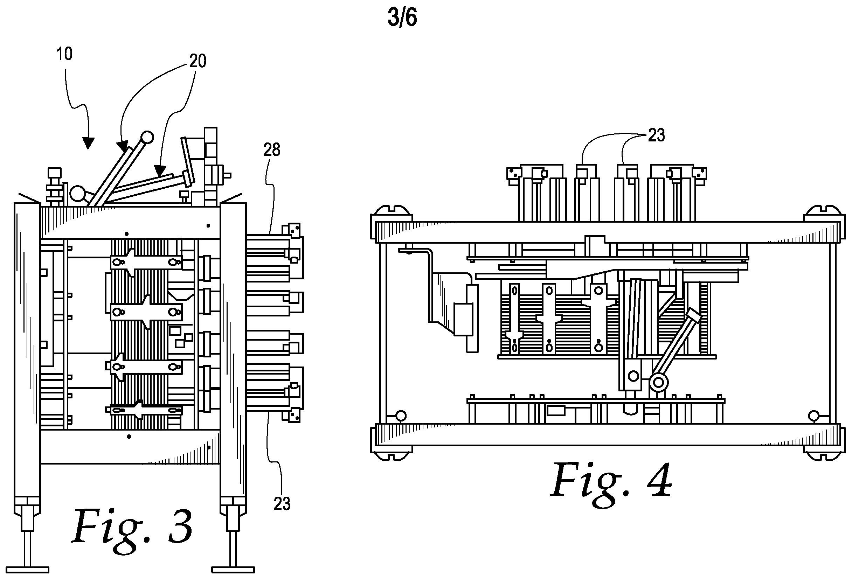

FIG. 3 is a side elevational view of the present heat-sealing apparatus.
FIG. 4 is a top plan view of the present heat-sealing apparatus;

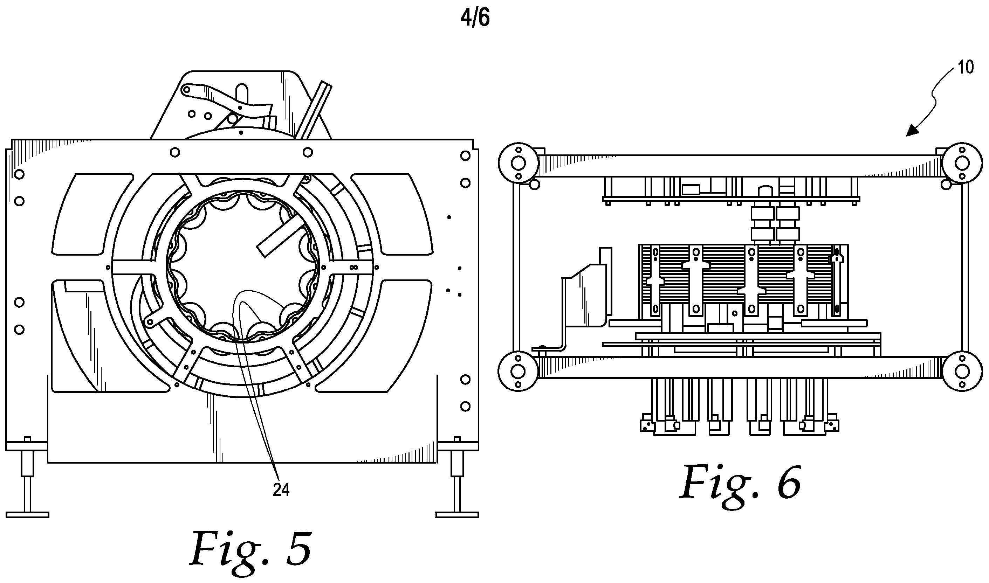

FIG. 5 is a front elevational view of the present heat-sealing apparatus;
FIG. 6 is a bottom plan view of the present heat-sealing apparatus;

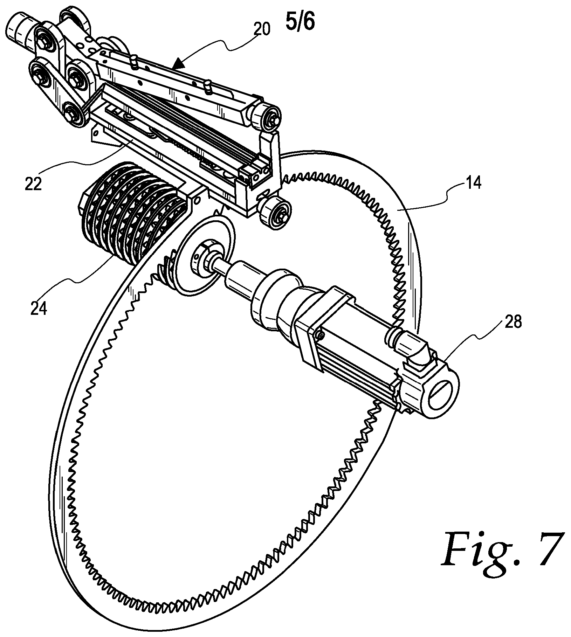

FIG. 7 is a diagrammatic view of the servo-drive arrangement of the present heat-sealing apparatus; and

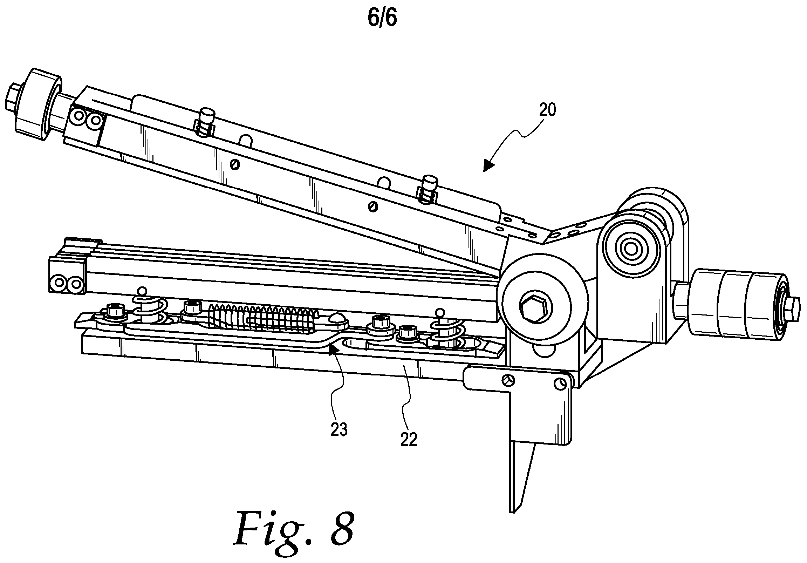

FIG. 8 is a diagrammatic perspective view of a heat-sealing assembly of the present heat-sealing apparatus.

### DETAILED DESCRIPTION OF THE INVENTION

While the present invention is susceptible to embodiment in various forms, there is shown in the drawings and hereinafter described a presently preferred embodiment, with the understanding that the present disclosure should be considered as an exemplification of the invention, and is not intended to limit the invention to the specific embodiment illustrated.

The present invention is directed to a heat-sealing apparatus, designated 10, of a flow wrapper machine which facilitates efficient, reliable and versatile operation. Notably, the apparatus 10 includes multiple ring gears driven by multiple servo motors in a desirably compact configuration, with the arrangement including quickly removable heat-sealing die heads for efficient operation and service.

An improved drive mechanism facilitates more accurate heat-sealing head placement, smoother operation, controlled stops, independent temperature control, and continuous running through die jams. Also included is a four-bar link on the heat-sealing head for open and closing the heat-sealing die.

As will be further described, the main drive consists of individual ring gears connected to each heat-sealing head with a bolt and a quick release holding the die. Each of the ring gears is driven by a pinion gear attached to the pinion shaft connected to the drive motor. To support the ring gears, each ring gear rides on idler gears or wheels on the other pinion shafts. The rings gears are close together to support all the heat-sealing heads.

Cams on the machine open and close the heat-sealing dies. The heat-sealing heads are driven independently by each motor to make for a smooth motion that aligns the heads between each article. This continuous motion gives the machine the ability to run faster and more accurately. The four-bar link gives the ability to make the cam track flat and reproduce the same motion with each machine. It is also able to use a cam path diverter to open the dies if there is a jam in the die and for the machine to continue to run and divert the double pack later downstream.

In accordance with the illustrated embodiment, a heat-sealing apparatus 10 for handling a plurality of articles carried on a heat-sealable web is disclosed. The apparatus 10 includes a plurality of ring gear members 14 arranged in parallel relationship with each other for rotation about a central axis.

The apparatus 10 further includes a plurality of heat-sealing assemblies 20, each mounted on the periphery of a respective one of the ring gear members 14 by a mounting plate 22 for rotation therewith. Each of the heat-sealing assemblies 14 is movable between opened and closed positions for effecting heat-sealing of the web between adjacent ones of the articles carried by the heat-sealable web.

A plurality of drive spindles 24 are positioned within the plurality of ring gear members 14 for guiding rotational movement of the ring gear members 14. Notably, each of the drive spindles 24 is operatively connected to a single, respective one of the ring gear members 14, so that together the drive spindles 24 drive the ring gear members 14 about the central axis of the apparatus.

Operation of the apparatus 10 is provided by a plurality of servo drive motors 28 respectively connected to the drive spindles 24. By this arrangement, operation of the drive motors 28 drives the drive spindles 24 and the ring gear members 14 to advance the heat-sealing assemblies 20 about the central axis of the apparatus, to thereby draw the heat-sealable web and the articles through the apparatus.

As will be appreciated, selective operation of the drive motors 28 positions the heat-sealing assemblies 20 at predetermined intervals to heat-seal the web to thereby heat-seal the articles carried on the web. In the preferred form, each heat-sealing assembly 20 is configured to cut the heat-sealed web at the predetermined intervals between the articles being wrapped, whereby the individual sealed articles are separated from the web for subsequent storage and shipment. Spacing between individual ones of the heat-sealing assemblies 20 can be selectively varied during each cycle of the machine to achieve the desired formation of the transverse heat-seals while assuring smooth and reliable operation of the apparatus 10.

In the preferred embodiment, each of the heat-sealing assemblies 20 comprises a four-bar linkage to permit movement of each heat-sealing assembly 20 between opened and closed positions by actuation from a two-dimensional cam 30. In the illustrated embodiment, the apparatus includes a diverter 32 for engagement with at least one of the heat-sealing assemblies 20 to move that one of the heat-sealing assemblies to the opened position to facilitate service of the apparatus. As noted, this diverter 32 acts to open one or more of the heat-sealing assemblies if there is a jam or other malfunction, while permitting the apparatus to operate, and to divert any improperly packaged articles later downstream in the packaging process.

Service to the apparatus is facilitated by mounting each of the heat-sealing assemblies 20 on the mounting plate 22 of the respective one of the ring gear members by a quick-release mechanism 23.

To ensure smooth and reliable operation, each of the drive spindles comprises a plurality of idler gears for non-driven engagement with the ring gear members to which that one of the drive spindles is not operatively connected.

From the foregoing, it will be observed that numerous modifications and variations of the present invention can be effected without departing from the scope of the present invention, which is defined by the appending claims. It is to be understood that no limitation with respect to the specific embodiment illustrated is intended nor should be inferred.

## Claims

1. A heat-sealing apparatus (1) for handling a plurality of articles carried on a heat-sealable web, comprising:
a plurality of ring gear members (14) arranged in parallel relationship with each other for rotation about a central axis;
a plurality of heat-sealing assemblies (20) each mounted on the periphery of a respective one of said ring gear members (14) for rotation therewith, each of said heat-sealing assemblies (20) being movable between opened and closed positions for effecting heat-sealing of said web between adjacent ones of said articles carried by said heat-sealable web;
a plurality of drive spindles (24) positioned within said plurality of ring gear members (14) for guiding rotational movement of said ring gear members (14), each of said drive spindles (24) being operatively connected to a respective one of said ring gear members (14) so that said drive spindles (24) drive said ring gear members (14) about said central axis; and
a plurality of drive motors (28) respectively connected to said drive spindles (24), so that operation of said drive motors (28) drives said drive spindles (24) and said ring gear member (14)to advance said heat-sealing assemblies (20) about said central axis to draw said heat-sealable web and said articles through said apparatus;
whereby selective operation of said drive motors (28) positions said heat-sealing assemblies (20) at predetermined intervals to heat-seal said web for heat-sealing the articles carried on said web.

2. A heat-sealing apparatus (1) in accordance with claim 1, comprising a two-dimensional cam wherein each of said heat-sealing assemblies (20) comprises a four-bar linkage to permit movement of each heat-sealing assembly between opened and closed positions by actuation from the two-dimensional cam.

3. A heat-sealing apparatus (1) in accordance with claim 2, wherein said apparatus includes a diverter (32) for engagement with at least one of said heat-sealing assemblies (20) to move that one of the heat-sealing assemblies (20) to the opened position to facilitate service of said apparatus

4. A heat-sealing apparatus (1) in accordance with claim 1, comprising a quick-release mechanism (23), wherein each of said heat-sealing assemblies (20) is mounted on the respective one of said ring gear members (14) by the quick-release mechanism (23) to facilitate service of said apparatus.

5. A heat-sealing apparatus (1) in accordance with claim 1, wherein each of said drive spindles (24) comprises a plurality of idler gears for non-driven engagement with the ring gear members (14) to which that one of the drive spindles (24) is not operatively connected.

## Patentansprüche

1. Heißsiegelvorrichtung (1) zum Handhaben einer Vielzahl von Artikeln, die auf einer heißsiegelbaren Bahn getragen werden, umfassend:
eine Vielzahl von Hohlradelementen (14), die in paralleler Beziehung zueinander angeordnet sind, zur Rotation um eine Mittelachse;
eine Vielzahl von Heißsiegelbaugruppen (20), die jeweils am Umfang eines jeweiligen der Hohlradelemente (14) zur Rotation damit montiert sind, wobei jede der Heißsiegelbaugruppen (20) zwischen einer geöffneten und einer geschlossenen Position bewegbar ist, um ein Heißsiegeln der Bahn zwischen benachbarten der Artikel zu bewirken, die durch die heißsiegelbaren Bahn getragen werden;
eine Vielzahl von Antriebsspindeln (24), die innerhalb der Vielzahl von Hohlradelementen (14) positioniert sind, zum Führen der Drehbewegung der Hohlradelemente (14), wobei jede der Antriebsspindeln (24) mit einem jeweiligen der Hohlradelemente (14) wirkverbunden ist, sodass die Antriebsspindeln (24) die Hohlradelemente (14) um die Mittelachse antreiben; und
eine Vielzahl von Antriebsmotoren (28), die jeweils mit den Antriebsspindeln (24) verbunden sind, sodass ein Betrieb der Antriebsmotoren (28) die Antriebsspindeln (24) und das Hohlradelement (14) antreibt, um die Heißsiegelbaugruppen (20) um die Mittelachse vorzuschieben, um die heißsiegelbare Bahn und die Artikel durch die Vorrichtung zu ziehen;
wobei ein selektiver Betrieb der Antriebsmotoren (28) die Heißsiegelbaugruppen (20) in vorbestimmten Abständen positioniert, um die Bahn zum Heißsiegeln der auf der Bahn getragenen Artikel heißzusiegeln.

2. Heißsiegelvorrichtung (1) nach Anspruch 1, umfassend einen zweidimensionalen Nocken, wobei jede der Heißsiegelbaugruppen (20) ein Viergelenkgetriebe umfasst, um eine Bewegung jeder Heißsiegelbaugruppe zwischen einer geöffneten und einer geschlossenen Position durch Betätigung von dem zweidimensionalen Nocken zu ermöglichen.

3. Heißsiegelvorrichtung (1) nach Anspruch 2, wobei die Vorrichtung eine Ablenkeinrichtung (32) zum Eingriff mit mindestens einer der Heißsiegelbaugruppen (20) enthält, um diese eine der Heißsiegelbaugruppen (20) in die geöffnete Position zu bewegen, um die Wartung der Vorrichtung zu erleichtern.

4. Heißsiegelvorrichtung (1) nach Anspruch 1, umfassend einen Schnelllösemechanismus (23), wobei jede der Heißsiegelbaugruppen (20) durch den Schnelllösemechanismus (23) an dem jeweiligen der Hohlradelemente (14) montiert ist, um die Wartung der Vorrichtung zu erleichtern.

5. Heißsiegelvorrichtung (1) nach Anspruch 1, wobei jede der Antriebsspindeln (24) eine Vielzahl von Losrädern zum nicht angetriebenen Eingriff mit den Hohlradelementen (14) umfasst, mit denen die eine der Antriebsspindeln (24) nicht wirkverbunden ist.

## Revendications

1. Appareil de thermoscellage (1) destiné à manipuler une pluralité d'articles transportés sur une bande thermoscellable, comprenant :
une pluralité d'éléments couronnes (14) agencés en relation parallèle les uns avec les autres en vue d'une rotation autour d'un axe central ;
une pluralité d'ensembles de thermoscellage (20), chacun monté sur la périphérie de l'un respectif desdits éléments couronnes (14) pour tourner avec lui, chacun desdits ensembles de thermoscellage (20) étant mobile entre des positions ouverte et fermée pour effectuer le thermoscellage de ladite bande entre des articles adjacents desdits articles transportés par ladite bande thermoscellable ;
une pluralité d'arbres d'entraînement (24) positionnés à l'intérieur de ladite pluralité d'éléments couronnes (14) destinés à guider le mouvement de rotation desdits éléments couronnes (14), chacun desdits arbres d'entraînement (24) étant fonctionnellement reliés à l'un respectif desdits éléments couronnes (14) afin que lesdits arbres d'entraînement (24) entraînent lesdits éléments couronnes (14) autour dudit axe central ; et
une pluralité de moteurs d'entraînement (28) respectivement reliés auxdites arbres d'entraînement (24), afin que le fonctionnement desdits moteurs d'entraînement (28) entraîne lesdits arbres d'entraînement (24) et ledit élément couronne (14) pour faire avancer lesdits ensembles de thermoscellage (20) autour dudit axe central afin de tirer ladite bande thermoscellable et lesdits articles à travers ledit appareil ;
moyennant quoi le fonctionnement sélectif desdits moteurs d'entraînement (28) positionne lesdits ensembles de thermoscellage (20) à des intervalles prédéfinis pour thermosceller ladite bande en vue du thermoscellage des articles transportés sur ladite bande.

2. Appareil de thermoscellage (1) selon la revendication 1, comprenant une came bidimensionnelle, chacun desdits ensembles de thermoscellage (20) comprenant une liaison à quatre barres pour permettre le mouvement de chaque ensemble de thermoscellage entre des positions ouverte et fermée par un actionnement provenant de la came bidimensionnelle.

3. Appareil de thermoscellage (1) selon la revendication 2, ledit appareil comprenant un déflecteur (32) destiné à venir en prise avec au moins l'un desdits ensembles de thermoscellage (20) pour déplacer celui-ci des ensembles de thermoscellage (20) vers la position ouverte afin de faciliter l'entretien dudit appareil.

4. Appareil de thermoscellage (1) selon la revendication 1, comprenant un mécanisme de libération rapide (23), chacun desdits ensembles de thermoscellage (20) étant monté sur l'un respectif desdits éléments couronnes (14) par le mécanisme de libération rapide (23) afin de faciliter l'entretien dudit appareil.

5. Appareil de thermoscellage (1) selon la revendication 1, chacun desdits arbres d'entraînement (24) comprenant une pluralité de roues dentées libres pour une mise en prise non entraînée avec les éléments couronnes (14) auxquels celui-ci des arbres d'entraînement (24) n'est pas fonctionnellement relié.
